# EUROPÄISCHE PATENTSCHRIFT

(11) **EP 2 309 362 B1**
(45) Veröffentlichungstag und Bekanntmachung des Hinweises auf die Patenterteilung: **31.08.2016**
(21) Anmeldenummer: 10177130.1
(22) Anmeldetag: 16.09.2010
(51) Int. Cl.: G06F 1/18

(54) **Computergehäuse und Computer**
Computer case and computer
Boîtier d'ordinateur et ordinateur

(30) Priorität: 01.10.2009 DE 102009047967
(43) Veröffentlichungstag der Anmeldung: 13.04.2011
(73) Patentinhaber: Fujitsu Technology Solutions Intellectual Property GmbH, 80807 München (DE)
(72) Erfinder: Kannler, Bernhard, 86199 Augsburg (DE); Schmid, Michael, 89407 Dillingen (DE)
(74) Vertreter: Epping - Hermann - Fischer

(56) Entgegenhaltungen:
- EP-A2- 1 380 923
- DE-U1-202006 009 293
- US-B1- 6 549 397
- Harry Butler: "Lian Li Tyr PC-X1000 Case Review", , 2. September 2009 (2009-09-02), XP055124254, Gefunden im Internet: URL:http://www.bit-tech.net/hardware/cases /2009/09/02/lian-li-tyr-pc-x1000-case-revi ew/ [gefunden am 2014-06-19]
- "SEGMENTED COOLING FOR PERSONAL COMPUTERS", IBM TECHNICAL DISCLOSURE BULLETIN, INTERNATIONAL BUSINESS MACHINES CORP. (THORNWOOD), US, Bd. 36, Nr. 10, 1. Oktober 1993 (1993-10-01), Seiten 431-433, XP000412435, ISSN: 0018-8689

## Beschreibung

Die Erfindung betrifft ein Computergehäuse und einen Computer.

Computer, insbesondere so genannte Tower-PC, erreichen teilweise eine hohe Abwärmelast. Computer müssen deshalb effizient be- und entlüftet werden, um die Abwärme aus dem Computergehäuse abzuführen. Des Weiteren können in dem Computergehäuse angeordnete Laufwerke Vibrationen und Geräusche des Computers verursachen. Die entstehenden Geräusche sollten möglichst schwach sein.

Aus der http://www.bit-tech.net/hardware/cases/2009/09/02/ lian-li-tyr-pc-x1000-case-review/ ist ein Computergehäuse bekannt, welches drei Innenraumabschnitte aufweist.

Aus der US 6,549,397 B1 ist ein PC bekannt, bei dem eine Leistungsversorgungsanordnung und eine Festplattenanordnung in einem unteren Drittel des Computers angeordnet sind. Der Erfindung liegt die Aufgabe zu Grunde, einen Computer zu schaffen, mit denen eine sichere und effiziente Be- und Entlüftung des Computers möglich ist.

Aus "Segmented Cooling for Personal Computers", IBM TECHNICAL DISCLOSURE BULLETIN, INTERNATIONAL BUSINESS MACHINES CORP. (THORNWOOD)(US, (19931001), vol. 36, no. 10, ISSN 0018-8689, PAGE 431 - 433) ist ein mehrteiliges System für einen personal Computer (PC) bekannt, welches den Luftstrom und das Kühlsystem durch Generieren separater linearer Luftstromsegmente verbessert.

Die Aufgabe wird gelöst durch die Merkmale des unabhängigen Patentanspruchs. Vorteilhafte Ausgestaltungen der Erfindung sind in dem Unteranspruch gekennzeichnet.

Die Erfindung zeichnet sich durch einen Computer mit einem Computergehäuse aus, das aufweist äußere Gehäusewände, innerhalb denen ein Innenraum zur Aufnahme einer Hauptplatine, von Steckkarten und einer Mehrzahl von Festplattenlaufwerken ausgebildet ist, und eine in dem Innenraum angeordnete innere Gehäusewand. Die innere Gehäusewand ist ausgebildet zur räumlichen Trennung eines unteren Abschnitts des Innenraums von einem über dem unteren Abschnitt des Innenraums angeordneten oberen Abschnitt des Innenraums. Der obere Abschnitt des Innenraums ist zur Aufnahme der Hauptplatine und der Steckkarten und der untere Abschnitt des Innenraums ist zur Aufnahme der Festplattenlaufwerke ausgebildet. Die äußeren Gehäusewände weisen eine Bodenplatte auf, die den unteren Abschnitt des Innenraums nach unten begrenzt. Weiter ist ein erster Lüfter vorgesehen, der ausgebildet ist zum Erzeugen einer Luftströmung in dem oberen Abschnitt des Innenraums. Weiter ist ein zweiter Lüfter vorgesehen, der ausgebildet ist zum Erzeugen einer Luftströmung in dem unteren Abschnitt des Innenraums zum separaten Abführen von Abwärme von in dem unteren Abschnitt aufgenommenen Festplattenlaufwerken aus dem unteren Abschnitt unabhängig von dem ersten Lüfter. Der Computer ist dadurch gekennzeichnet, dass alle oder mindestens eine Mehrzahl der Festplattenlaufwerke gleichmäßig auf der Bodenplatte angeordnet sind. Hierbei ist die Bodenplatte im Wesentlichen durch die Festplattenlaufwerke bedeckt. In dem unteren Abschnitt des Innenraums sind keine weiteren Komponenten angeordnet. Weiterhin sind in der inneren Gehäusewand Öffnungen angeordnet, die ausgebildet sind zur lufttechnischen Kopplung des unteren Abschnitts des Innenraums mit dem oberen Abschnitt des Innenraums.

Dies hat den Vorteil, dass die Abwärme der Festplattenlaufwerke auf den separaten unteren Abschnitt des Innenraums beschränkt werden kann. Damit kann eine Belastung der Hauptplatine und Steckkarten mit der Abwärme der Festplattenlaufwerke vermieden werden. Die Festplattenlaufwerke können in einem tief gelegenen Bereich des Innenraums angeordnet sein. Damit ist ein niedriger Schwerpunkt des Computers möglich. Eigenschwingungen oder Vibrationen des Computergehäuses können sehr klein sein. Damit ist eine nur geringe Geräuschentwicklung möglich. Des Weiteren kann das Computergehäuse mit Gehäusewänden geringer Wandstärke ausgebildet sein. Damit sind geringe Kosten und ein geringes Gewicht des Computergehäuses erreichbar.

Der Computer hat den ersten Lüfter, der ausgebildet ist zum Erzeugen einer Luftströmung in dem oberen Abschnitt des Innenraums, und den zweiten Lüfter. Der zweite Lüfter ist in einer der äußeren Gehäusewände oder in dem unteren Abschnitt des Innenraums angeordnet und ausgebildet zum Erzeugen einer Luftströmung in dem unteren Abschnitt des Innenraums. Dies ermöglicht es, die Abwärme der Festplattenlaufwerke mittels des zweiten Lüfters unabhängig von dem ersten Lüfter separat aus dem unteren Abschnitt des Innenraums abzuführen, ohne weitere im Innenraum angeordnete Bauteile thermisch zu belasten.

Alle oder mindestens eine Mehrzahl der Festplattenlaufwerke sind auf der Bodenplatte angeordnet. Insbesondere bedecken die Festplattenlaufwerke die Bodenplatte im Wesentlichen vollständig.

Dies hat den Vorteil, dass ein sehr niedriger Schwerpunkt des Computers möglich ist. Des Weiteren sind keine zusätzlichen Elemente zum Verhindern des Kippens des Computers erforderlich.

In einer bevorzugten Ausführungsform ist das Computergehäuse quaderförmig ausgebildet. Der untere Abschnitt des Innenraums erstreckt sich über eine gesamte Breite und/oder eine gesamte Tiefe des Computergehäuses. Dies hat den Vorteil, dass eine gute Verteilung der Festplattenlaufwerke über die Fläche des unteren Abschnitts des Innenraums möglich ist.

In der inneren Gehäusewand sind Öffnungen angeordnet, die ausgebildet sind zur lufttechnischen Kopplung des unteren Abschnitts des Innenraums mit dem oberen Abschnitt des Innenraums. Dies hat den Vorteil, dass mittels des Lüfters eine Luftströmung von dem oberen zu dem unteren Abschnitt des Innenraums erreicht werden kann. Damit kann eine Abfuhr der Abwärme aus dem gesamtem Innenraum des Gehäuses (mit der Hauptplatine und den Steckkarten) mittels des Lüfters erreicht werden.

Ausführungsbeispiele der Erfindung sind im Folgenden anhand der schematischen Zeichnungen näher erläutert.

Es zeigen:
- Figur 1: eine perspektivische Ansicht eines Computers in einer ersten Ausführungsform,
- Figur 2: eine weitere perspektivische Ansicht des Computers,
- Figur 3: eine Seitenansicht des Computers, und
- Figur 4: eine perspektivische Ansicht des Computers in einer weiteren Ausführungsform.

Elemente gleicher Konstruktion oder Funktion sind figurenübergreifend mit den gleichen Bezugszeichen versehen.

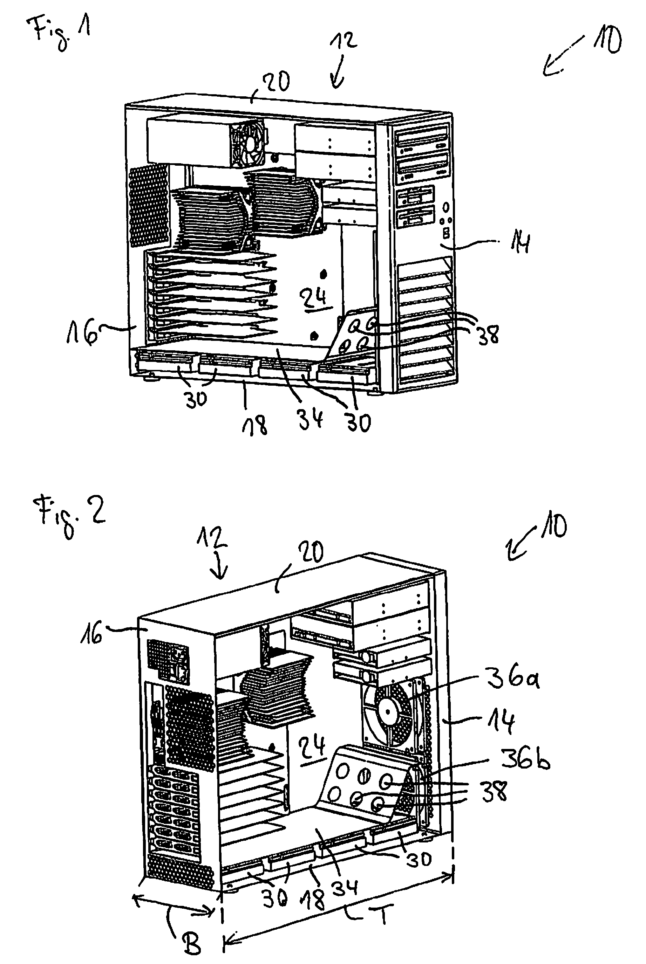

Die Figuren 1 bis 3 zeigen eine erste Ausführungsform eines Computers 10. Der Computer 10 ist insbesondere als so genannter Tower-PC ausgebildet. Der Computer 10 hat ein Computergehäuse 12, das quaderförmig ausgebildet ist.

Das Computergehäuse 12 weist eine Frontwand 14, eine Rückwand 16, eine Bodenplatte 18 und weitere Gehäusewände 20 auf, die zusammen die äußeren Gehäusewände bilden. Die weiteren Gehäusewände 20 können beispielsweise eine Deckplatte und Seitenwände sein.

Die Gehäusewände 14, 16, 18, 20 können insbesondere aus einem Metallblech, vorzugsweise einem Stahlblech bestehen oder ein Stahlblech aufweisen.

Innerhalb der äußeren Gehäusewände 14, 16, 18, 20 ist ein Innenraum 24 ausgebildet. In dem Innenraum 24 sind eine Hauptplatine 26 mit einem Mikroprozessor und mehrere Steckkarten 28 angeordnet.

In dem Innenraum 24 sind weiter Festplattenlaufwerke 30 angeordnet.

In Öffnungen der Frontwand 14 sind darüber hinaus weitere Laufwerke 32 eingesetzt. Die Laufwerke 32 sind insbesondere 3-1/2"-Laufwerke und 5-1/4"-Laufwerke.

In dem Innenraum 24 ist eine innere Gehäusewand 34 angeordnet, die sich in der hier gezeigten Ausführungsform des Computergehäuses 12 über eine gesamte Breite B und eine gesamte Tiefe T des Computergehäuses 12 erstreckt. Die innere Gehäusewand 34 trennt einen unteren Abschnitt 24a des Innenraums 24 von einem oberen Abschnitt 24b des Innenraums 24. Der obere Abschnitt 24b des Innenraums 24 ist oberhalb des unteren Abschnitts 24a des Innenraums 24 angeordnet.

In dem oberen Abschnitt 24b des Innenraums 24 sind die Hauptplatine 26 mit dem Mikroprozessor und die Steckkarten 28 angeordnet. In dem unteren Abschnitt 24a des Innenraums 24 sind die Festplattenlaufwerke 30 angeordnet. Dies bedeutet, dass die innere Gehäusewand 34 dem Innenraum 24 derart unterteilt, dass der untere Abschnitt 24a des Innenraums 24 als ein sich über die gesamte Breite B und die gesamte Tiefe T des Computergehäuses 12 erstreckender Kanal ausgebildet ist, in dem die Festplattenlaufwerke 30 aufgenommen sind. Weitere Komponenten des Computers 10 sind in dem unteren Abschnitt 24a des Innenraums 24 nicht angeordnet und aufgenommen.

In der Frontwand 14 sind Lüfter 36a, 36b angeordnet. In der in den Figuren 1 bis 3 gezeigten Ausführungsform des Computergehäuses 12 sind in der Frontwand 14 insbesondere ein erster Lüfter 36a und ein zweiter Lüfter 36b angeordnet. Die beiden Lüfter 36a, 36b sind insbesondere übereinander angeordnet. Der erste Lüfter 36a ist dem oberen Abschnitt 24b des Innenraums 24 zugeordnet und kann eine Luftströmung in dem oberen Abschnitt 24b des Innenraums 24 herbeiführen, mittels der Abwärme von der Hauptplatine 26 mit dem Mikroprozessor und den Steckkarten 28 abgeführt werden kann.

Der zweite Lüfter 36b ist unterhalb des ersten Lüfters 36a angeordnet und dem unteren Abschnitt 24a des Innenraums 24 zugeordnet. Mit dem unteren, zweiten Lüfter 36b kann in dem unteren Abschnitt 24a des Innenraums 24, in dem die Festplattenlaufwerke 30 angeordnet sind, ein Luftstrom erzeugt werden, mittels dem Abwärme von den Festplattenlaufwerken 30 an die Umgebung abgeführt werden kann.

Durch die Ausbildung des unteren Abschnitts 24a des Innenraums 24 mittels der inneren Gehäusewand 34 kann erreicht werden, dass die an den Festplattenlaufwerken 30 anfallende Abwärme in einem begrenzten Bereich des Innenraums 24 verbleiben kann, und nicht in den oberen Abschnitt 24b des Innenraums 24 gelangt. Damit kann eine thermische Belastung der Hauptplatine 26 mit dem Mikroprozessor und der Steckkarten 28 durch die Abwärme der Festplattenlaufwerke 30 vermieden werden. Die Abwärme der Festplattenlaufwerke 30 kann mittels des unteren, zweiten Lüfters 36b aus dem unteren Abschnitt 24a des Innenraums 24 abgesaugt werden. Damit kann eine Belastung weiterer im Innenraum 24 des Computergehäuses 12 angeordneter Bauteile gering gehalten werden.

Alle Festplattenlaufwerke 30 sind gleichmäßig auf der Bodenplatte 18 angeordnet. Dies bedeutet, dass die Bodenplatte 18 im Wesentlichen durch die Festplattenlaufwerke 30 bedeckt ist. Damit kann ein sehr niedriger Schwerpunkt des Computers 10 erreicht werden. Zusätzliche Elemente zum Verhindern des Kippens des Computers 10 können so vermieden werden.

Durch die feste Anordnung der Festplattenlaufwerke 30 an der Bodenplatte 18 im unteren Abschnitt 24a des Innenraums 24 können Eigenschwingungen oder Vibrationen des Computergehäuses 12 klein gehalten werden. Darüber hinaus kann die Kraftübertragung von den Festplattenlaufwerken 30 auf das Computergehäuse 12 klein gehalten werden, so dass geringere Stabilitätsanforderungen an das Computergehäuse 12 gestellt werden können. Insbesondere kann somit erreicht werden, dass die Geräuschentwicklung des Computers 10, insbesondere des Computergehäuses 12, sehr klein werden kann. Des Weiteren ist es möglich, anstelle aufwendiger Füße zum Aufstellen es Computergehäuses 12 einfache Füße einzusetzen.

Durch die geringe mechanische Belastung des Computergehäuses 12 können die Wandstärken der äußeren Gehäusewände 14, 16, 18, 20 klein ausfallen, so dass eine Gewichtsreduzierung des Computergehäuses 12 möglich ist. Insbesondere ist es möglich, für die äußeren Gehäusewände 14, 16, 18, 20 anstatt von Blechen mit der üblichen Blechdicke von zirka 1,2 mm Bleche mit einer Blechdicke von 0,6 bis 0,8 mm für die äußeren Gehäusewände 14, 16, 18, 20 zu verwenden.

Die innere Gehäusewand 34 weist Öffnungen 38 auf, die eine lufttechnische Kopplung des unteren Abschnitts 24a des Innenraums 24 mit dem oberen Abschnitt 24b des Innenraums 24 ermöglichen. Es ist so möglich, dass auch der untere, zweite Lüfter 36b, der eine Be- und Entlüftung des unteren Abschnitts 24a des Innenraums 24 bewirkt, zu einer Be- oder Entlüftung des oberen Abschnitts 24b des Innenraums 24 beitragen kann. Damit kann auch der untere, zweite Lüfter 36b zu einer Abfuhr der Abwärme von der Hauptplatine 26 mit dem Mikroprozessor und den Steckkarten 28 beitragen.

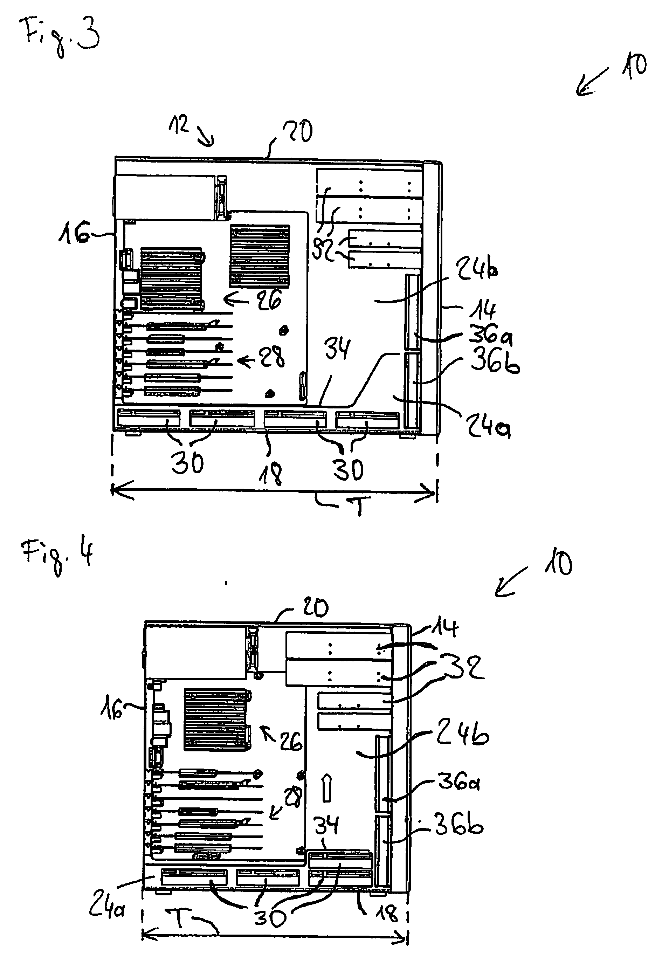

In Figur 4 ist eine weitere Ausführungsform des Computers 10 gezeigt, mit einer gegenüber der Ausführungsform der Figuren 1 bis 3 reduzierten Tiefe T des Computergehäuses 12.

Die Festplattenlaufwerke 30 sind in dieser Ausführungsform in ihrer Mehrzahl auf der Bodenplatte 18 des Computergehäuses 12 angeordnet. Eines der Festplattenlaufwerke 30 wird aufgrund der geringen Tiefe T des Computergehäuses 12 oberhalb von einem anderen der Festplattenlaufwerke 30 angeordnet. Grundsätzlich ist jedoch auch in dieser Ausführungsform die Mehrzahl der Festplattenlaufwerke 30 auf der Bodenplatte 18 angeordnet. Es kann so ein niedriger Schwerpunkt des Computers 10 erreicht werden, und zusätzliche Elemente zum Verhindern eines Kippens des Computers 10 können vermieden werden.

Die Erfindung ist nicht auf die angegebenen Ausführungsbeispiele beschränkt. Weiterhin ist es möglich, die Merkmale der verschiedenen Ausführungsbeispiele miteinander zu kombinieren, so dass auch derartige Anordnungen von der Erfindung umfasst sind.

### Bezugszeichenliste

- 10: Computer
- 12: Computergehäuse
- 14: Frontwand
- 16: Rückwand
- 18: Bodenplatte
- 20: weitere Gehäusewände
- 24: Innenraum
- 24a,b: unterer, oberer Abschnitt des Innenraums
- 26: Hauptplatine
- 28: Steckkarten
- 30: Festplattenlaufwerk
- 32: weitere Laufwerke
- 34: innere Gehäusewand
- 36a,b: erster, zweiter Lüfter
- 38: Öffnungen in innerer Gehäusewand

- B: Breite von 12
- T: Tiefe von 12

## Patentansprüche

1. Computer (10), der aufweist
- ein Computergehäuse (12) mit äußeren Gehäusewänden (14,16,18,20), innerhalb denen ein Innenraum (24) zur Aufnahme einer Hauptplatine (26), von Steckkarten (28) und einer Mehrzahlvon Festplattenlaufwerken (30) ausgebildet ist, und
- eine in dem Innenraum (24) angeordnete innere Gehäusewand (34), die ausgebildet ist zur räumlichen Trennung eines unteren Abschnitts (24a) des Innenraums (24) von einem über dem unteren Abschnitt (24a) des Innenraums (24) angeordneten oberen (24b) Abschnitt des Innenraums (24), wobei der obere Abschnitt (24b) des Innenraums (24) zur Aufnahme der Hauptplatine (26) und der Steckkarten (28) und der untere Abschnitt (24a) des Innenraums (24) zur Aufnahme der Festplattenlaufwerke (30) ausgebildet ist und wobei die äußeren Gehäusewände (14,16,18,20) eine Bodenplatte (18) aufweisen, die den unteren Abschnitt (24a) des Innenraums (24) nach unten begrenzt;
- einen ersten Lüfter (36a), der ausgebildet ist zum Erzeugen einer Luftströmung in dem oberen Abschnitt (24b) des Innenraums (24), und
- einen zweiten Lüfter (36b), der in einer der äußeren Gehäusewände (14,16,18,20) oder in dem unteren Abschnitt (24a) des Innenraums (24) angeordnet ist und der ausgebildet ist zum Erzeugen einer Luftströmung in dem unteren Abschnitt (24a) des Innenraums (24) zum separaten Abführen von Abwärme von in dem unteren Abschnitt aufgenommenen Festplattenlaufwerken (3) aus dem unteren Abschnitt (24a) unabhängig von dem ersten Lüfter (36a);
**dadurch gekennzeichnet, dass**
alle oder mindestens eine Mehrzahl der Festplattenlaufwerke (30) gleichmäßig auf der Bodenplatte (18) angeordnet sind, wobei die Bodenplatte (18) im Wesentlichen durch die Festplattenlaufwerke (30) bedeckt ist und keine weiteren Komponenten in dem unteren Abschnitt (24a) des Innenraums (24) angeordnet sind; und
in der inneren Gehäusewand (34) Öffnungen (38) angeordnet sind, die ausgebildet sind zur lufttechnischen Kopplung des unteren Abschnitts (24a) des Innenraums (24) mit dem oberen Abschnitt (24b) des Innenraums (24).

2. Computer (10) nach Anspruch 1, wobei das Computergehäuse (12) quaderförmig ausgebildet ist, und der untere Abschnitt (24a) des Innenraums (24) sich über eine gesamte Breite (B) und/oder eine gesamte Tiefe (T) des Computergehäuses (12) erstreckt.

## Claims

1. Computer (10), comprising
- a computer case (12) with outer case panels (14, 16, 18, 20) inside of which an internal space (24) is formed for accommodating a motherboard (26), plug-in cards (28) and a plurality of hard disk drives (30), and
- an inner case panel (34) arranged in the internal space (24), which is formed for physically separating a lower section (24a) of the internal space (24) from an upper (24b) section of the internal space (24) arranged above said lower section (24a) of the internal space (24), wherein the upper section (24b) of the internal space is formed for accommodating the motherboard (26) and the plug-in cards (28) and the lower section (24a) of the internal space (24) is formed for accommodating the hard disk drives (30), and wherein the outer case panels (14, 16, 18, 20) have a bottom plate (18) which delimits the lower section (24a) of the internal space (24) downwards;
- a first fan (36a) which is formed for producing an air flow in the upper section (24b) of the internal space (24), and
- a second fan (36b), which is arranged in one of the outer case panels (14, 16, 18, 20) or in the lower section (24a) of the internal space (24) and which is formed for producing an air flow in the lower section (24a) of the internal space (24) for separately dissipating waste heat of hard disk drives (30) accommodated in the lower section from the lower section (24a) independently of the first fan (36a);
**characterized in that**
all or at least a plurality of hard disk drives (30) is arranged on the bottom plate (18) in a uniform manner, wherein the bottom plate (18) is essentially covered by the hard disk drives (30) and no further components are arranged in the lower section (24a) of the internal space (24); and
openings (38) are arranged in the inner case panel (34), which are formed for ventilation coupling of the lower section (24a) of the internal space (24) to the upper section (24b) of the internal space (24)

2. Computer (10) according to claim 1, wherein the computer case has a substantially rectangular-block-shaped design and the lower section (24a) of the internal space extends over an entire width (B) and/or an entire depth (T) of the computer case (12).

## Revendications

1. Ordinateur (10), qui présente
- un boîtier d'ordinateur (12) avec des parois extérieures de boîtier (14, 16, 18, 20) à l'intérieur desquelles un espace intérieur (24) est constitué en vue de loger une platine principale (26), des cartes enfichables (28) et une pluralité de lecteurs de disques durs (30), et
- une paroi intérieure de boîtier (34) disposée dans l'espace intérieur (24), qui est constituée en vue de la séparation spatiale d'une section inférieure (24a) de l'espace intérieur (24) par une section supérieure (24b) de l'espace intérieur (24) disposée au-dessus de la section inférieure (24a) de l'espace intérieur (24), la section supérieure (24b) de l'espace intérieur (24) étant constituée en vue de loger la platine principale (26) et les cartes enfichables (28), et la section inférieure (24a) de l'espace intérieur (24) étant constituée en vue de loger les lecteurs de disques durs (30), et les parois extérieures de boîtier (14, 16, 18, 20) présentant une plaque de fond (18) qui limite par le bas la section inférieure (24a) de l'espace inférieur (24) ;
- un premier ventilateur (36a), qui est constitué en vue de générer un courant d'air dans la section supérieure (24b) de l'espace intérieur (24), et
- un second ventilateur (36b), qui est disposé dans une des parois extérieures du boîtier (14, 16, 18, 20) ou dans la section inférieure (24a) de l'espace intérieur (24) et qui est constitué en vue de générer un courant d'air dans la section inférieure (24a) de l'espace intérieur (24), afin d'évacuer séparément de la chaleur dissipée de lecteurs de disques durs (3) logés dans la section inférieure hors de la section inférieure (24a) et indépendamment du premier ventilateur (36a) ;
**caractérisé en ce que**
tous ou au moins une pluralité des lecteurs de disques durs (30) sont disposés de manière uniforme sur la plaque de fond (18), la plaque de fond (18) étant couverte pour l'essentiel par les lecteurs de disques durs (30) et aucuns autres composants n'étant disposés dans la section inférieure (24a) de l'espace intérieur (24) ; et
dans la paroi intérieure de boîtier (34), des orifices (38) sont disposés, qui sont constitués en vue du couplage aéraulique de la section inférieure (24a) de l'espace intérieur (24) avec la section supérieure (24b) de l'espace intérieur (24).

2. Ordinateur (10) selon la revendication 1, le boîtier d'ordinateur (12) étant constitué en forme parallélépipédique, et la section inférieure (24a) de l'espace intérieur (24) s'étendant sur une largeur globale (B) et/ou une profondeur globale (T) du boîtier d'ordinateur (12).
